# DEMANDE DE BREVET EUROPEEN

(11) **EP 0 534 845 A1**
(43) Date de publication de la demande: **31.03.1993**
(21) Numéro de dépôt: 92402608.1
(22) Date de dépôt: 23.09.1992
(51) Int. Cl.: A01D 46/26, A01G 13/02

(54) **Procédé pour la culture et la récupération des graines florales ou potagères en serre ou en pleine terre et goulotte en résultant**

(30) Priorité: 25.09.1991 FR 9111773
(71) Demandeur: S.A. RACCORDS ET PLASTIQUES NICOLL, 49309 Cholet Cédex (FR)
(72) Inventeur: Blandin, Jean Claude, F-49300 Cholet (FR)
(74) Mandataire: Mongrédien, André (FR)

(57) **Abrégé**

L'invention concerne un procédé pour la culture et la récupération des graines florales ou potagères. Elle fait appel à des goulottes préfabriquées (3) semi-rigides, disposées entre les rangs de plantes (1-1′) à même le sol, afin d'en épouser la configuration, et de telle manière qu'elles viennent prendre légèrement appui par leurs extrémités latérales arrondies (4-4′) contre les pieds (5-5′) des plantes de deux rangs de culture consécutifs, ou tout au moins s'arrêtent à proximité immédiate des dits pieds.

Chaque goulotte présente en coupe une configuration plane ou légèrement incurvée, munie d'un bourrelet creux à chacune de ses extrémités longitudinales.

La récupération après murissement des graines tombées dans les goulottes se fait par simple balayage ou aspiration, ce qui évite les pertes et réduit sensiblement le nombre des interventions nécessaires pour la cueillette.

## Description

L'invention concerne un procédé pour la culture et la récupération des graines florales ou potagères en serre ou en pleine terre et plus particulièrement une goulotte préfabriquée permettant un ramassage aisé aussi bien en serre qu'en pleine terre.

Dans les techniques traditionnelles de culture en pleine terre, on procède au ramassage des graines issues des plantes disposées en rang parallèles en passant régulièrement dans ces rangs pour détecter de-visu les graines qui sont bonnes à cueillir. Cette opération doit être fréquente si l'on veut respecter la parfaite maturité des graines lors de la cueillette, mais néanmoins il s'avère que la perte de graines qui tombent dans les sillons hors ramassage demeure importante.

Pour pallier cette perte importante, certains exploitants préfèrent faucher les fleurs et récupérer les graines après séchage et battage. Si la productivité s'en trouve sensiblement améliorée, la qualité des graines demeure aléatoire et directement fonction du degré de'maturité de ces dernières.

Dans les techniques de culture sous-serre, il est fait appel à un film plastique qui recouvre le sol et empêche les graines de se perdre au ramassage. Les plantes sont alors disposées ou semées dans des trous ménagés sur le film plastique étendu à même le sol. L'arrosage est assuré par un goutte à goutte débouchant au niveau de chaque trou du film plastique.

Suivant cette technique le ramassage des graines s'effectue, dès lors que celles-ci sont tombées naturellement sur le film plastique, soit par balayage, soit par aspiration, ce qui évite les pertes importantes recontrées dans la culture en pleine terre et réduit sensiblement le nombre des interventions requises.

En fait le film plastique de par sa minceur entraine toutefois un certain nombre d'inconvénients:
. outre que sa mise en oeuvre sur le sol est longue, il n'est pas réutilisable pour l'année suivante, ce qui représente finalement un coût non négligeable pour l'exploitant.
. Le sol étant totalement recouvert, l'opération d'élimination des herbes parasites au niveau de chaque plan s'avère fastidieuse de même que l'élimination des rongeurs qui peuvent faire des dégats sur les arrosages entre terre et film.

L'invention mise au point par la demanderesse permet d'éviter les inconvénients de ces différentes techniques tout en conservant les avantages certains apportés par la culture sous film plastique (absence d'évaporation trop rapide des sols) et concerne un procédé pour la culture et la récupération des graines florales ou potagères faisant appel à une goulotte préfabriquée rapide à mettre en oeuvre sur le sol ou à déplacer si une intervention s'avère nécessaire contre les mauvaises herbes ou les rongeurs, la dite goulotte permettant le recueil avec un minimum de perte des graines parvenues à maturité, et une réduction sensible du nombre des interventions nécessaires pour la récolte.

Le procédé est caractérisé en ce que des goulottes préfabriquées semi-rigides sont disposées entre les rangs de plantes, à même le sol, afin d'en épouser la configuration et de telle manière qu'elles viennent prendre légèrement appui par leurs extrémités longitudinales arrondies contre les pieds des plantes de deux rangs successifs ou tout au moins s'arrêtent à proximité immédiate des dits pieds.

Chaque goulotte présente en coupe une configuration plane ou légèrement incurvée munie d'un bourrelet creux à chacune de ses extrémités longitudinales. Elle est réalisée en matière thermoplastique résistante aux chocs et aux intempéries.

Selon une variante de l'invention, chaque goulotte intègre le long de ses extrémités longitudinales arrondies un dispositif d'arrosage goutte à goutte, l'eau étant canalisée à l'intérieur des bourrelets creux et les bourrelets des différentes goulottes étant raccordés entre eux par des tuyauteries d'amenée d'eau d'arrosage reliées à un poste d'alimentation.

L'invention sera mieux comprise à l'aide de la description qui suit d'un exemple non limitatif de réalisation ainsi que des figures annexées parmi lesquelles :

**LA FIGURE 1** : est une vue en coupe d'un champ sur lequel on a utilisé le procédé de culture et de récupération des graines suivant l'invention.

**LA FIGURE 2** : est une vue de détail en coupe d'une goulotte suivant l'invention.

**LA FIGURE 3** : représente un schéma de branchement du dispositif d'arrosage.

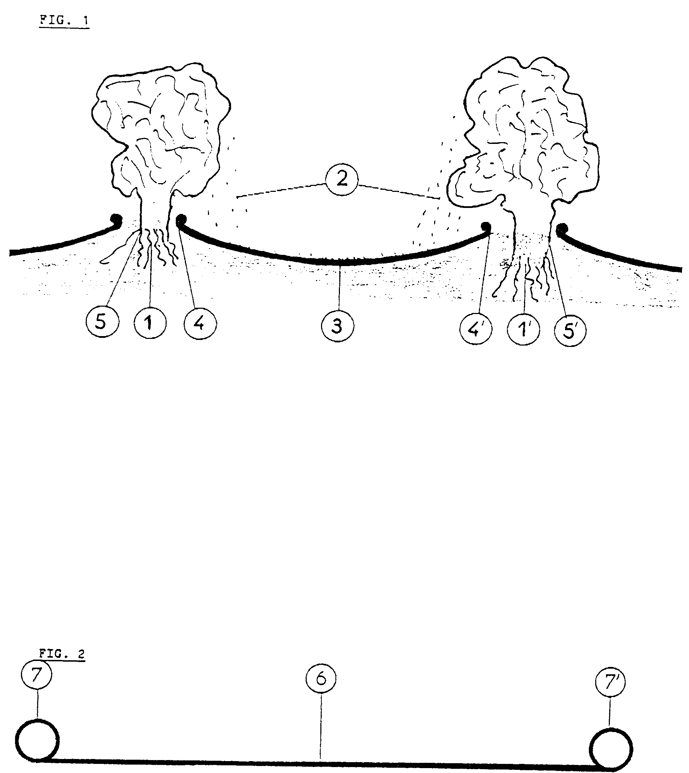

Commme représenté sur la figure 1, le procédé pour la culture et la récupération des graines florales ou potagères consiste à introduire entre les rangs de plantes (1-1′) dont on récupérera les graines (2) et à même le sol, des goulottes en matière thermoplastique (3) semi-rigides, en PVC par exemple, de telle manière qu'elles viennent prendre légèrement appui par leurs extrémités longitudinales arrondies (4-4′) contre les pieds (5-5′) des plantes de deux rangs successifs.

Ces goulottes (3), et comme représenté sur la figure 2, se distinguent en coupe par une surface plane (6), ou légèrement cintrée, de l'ordre de 60 cm de large dans le présent exemple, et sont munies d'un bourrelet creux (7-7′)ménagé sur chacune de leurs extrémités longitudinales et assurant à la fois la rigidification du profilé, sa facilité de manutention, la protection des pieds des plantes.

Pour obtenir un bon rapport poids-rigidité l'épaisseur des goulottes se situe sensiblement dans la plage de 0,5 à 1mm, ce qui permet d'envisager, en cas de produit profilé obtenu par extrusion, des longueurs manipulables par un seul individu de l'ordre de 15 à 20 m. Il est également possible d'envisager que ces goulottes préfabriquées soient livrées sous forme d'un profilé conditionné en rouleau de 20 à 100 m déroulable et découpable à façon sur le site d'utilisation.

Dans le cas de goulottes en matières plastiques il convient bien entendu de choisir un thermoplastique résistant aux chocs et aux UV, pour mieux supporter toutes les contraintes de l'environnement rencontrées au niveau du sol. Il semble également préférable de choisir une teinte claire pour leur réalisation, les graines apparaissant mieux par contraste.

Une fois les goulottes mises en oeuvre à même le sol, les plantes peuvent croître avec quasiment les mêmes avantages qu'avec le film plastique, mais les interventions de nettoyage des pieds, de traîtement contre les maladies ... sont grandement facilitées car la goulotte demeure manipulable grâce aux bourrelets.

Comme représenté sur la figure 1, lorsque les graines (2) sont parvenues à maturité, ces dernières se décrochent naturellement et tombent dans les goulottes (3). Il ne reste plus alors qu'à effectuer un balayage ou une aspiration pour effectuer la récolte.

Le démontage des goulottes étant aisé grâce la présence des bourrelets longitudinaux, les produits peuvent être stockés provisoirement par empilage ou enroulement pendant le labourage de l'aire de culture et le réensemencement pour la future récolte, puis l'on remet ensuite les goulottes entre les rangs de plantation.

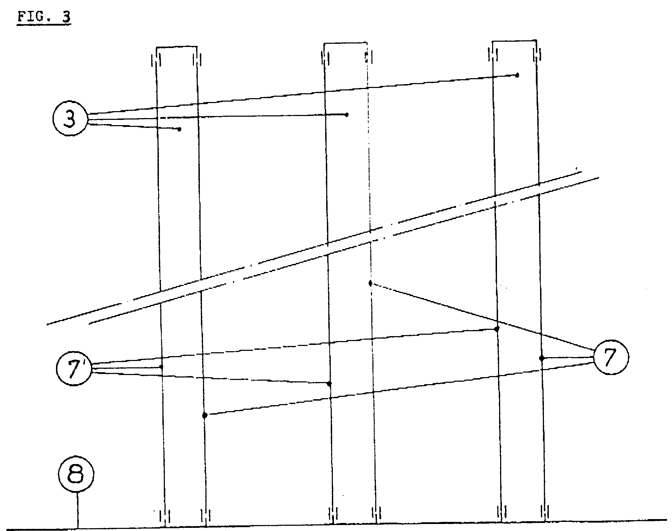

L'on a représenté sur la figure 3 un schéma de principe d'un branchement des tuyauteries (8) d'amenée d'eau d'arrosage dans les bourrelets (7-7′) des goulottes (3) dotés de dispositifs d'arrosage goutte à goutte.
Cette variante n'est qu'une amélioration envisageable par rapport à l'idée de base mais demeure facultative selon le type de culture envisagé.

Le procédé suivant l'invention est plus particulièrement destiné aux cultures horticoles et maraichères.

## Revendications

1. Procédé pour la récupération des graines florales ou potagères, caractérisé en ce que des goulottes préfabriquées (3) semi-rigides sont disposées entre les rangs de plantes (1-1′) à même le sol, afin d'en épouser la configuration et de telle manière qu'elles viennent prendre légèrement appui par leurs extrémités latérales arrondies (4-4′) contre les pieds (5-5′)des plantes de deux rangs de culture consécutifs ou tout au moins s'arrêtent à proximité immédiate des dits pieds.

2. Goulotte pour la mise en oeuvre du procédé selon la revendication 1, caractérisée en ce qu'elle présente en coupe une configuration plane (6) ou légèrement incurvée, munie d'un bourrelet (7-7′) creux à chacune de ses extrémités longitudinales.

3. Goulotte selon la revendication 2, caractérisée en ce qu'elle est réalisée en une matière thermoplastique résistant aux chocs et aux intempéries.

4. Goulotte selon la revendication 3, caractérisée en ce qu'elle est fabriquée en une couleur préférentiellement claire, tranchant avec celle des graines (2) à récolter.

5. Goulotte selon l'une quelconque des revendications 2 à 4, caractérisée en ce qu'elle se présente sous forme d'éléments profilés manipulables par un seul individu.

6. Goulotte selon l'une quelconque des revendications 2 à 5, caractérisée en ce qu'elle est conditionnée sous forme d'un rouleau déroulable et découpable à façon sur le site d'utilisation.
